# EUROPEAN PATENT APPLICATION

(11) **EP 2 546 648 A2**
(43) Date of publication of application: **16.01.2013**
(21) Application number: 11753628.4
(22) Date of filing: 10.03.2011
(51) Int. Cl.: G01N 33/48, G01N 35/08

(54) **CHIP FOR SEPARATING BLOOD CELLS**

(30) Priority: 12.03.2010 KR 20100022124
(71) Applicant: Nanoentek Inc., Seoul 152-711 (KR)
(72) Inventor: HUR, Daesung, Suwon-si Gyeonggi-do 440-320 (KR); OH, Jong Hyun, Seoul 134-707 (KR); KIM, Jae Jeong, Seoul 150-073 (KR); PARK, Eun Hee, Seoul 151-015 (KR); PARK, Ji Young, Seoul 135-080 (KR)
(74) Representative: Mounteney, Simon James
(86) International application number: PCT/KR2011/001680
(87) International publication number: WO 2011/112023

(57) **Abstract**

A corpuscle separation chip is presented, which is capable of separating plasma from blood using capillary forces without causing leakage of the blood in undesired directions. The corpuscle separation chip may include an upper board for securing a membrane such that one or more edges maintain non-contact, where a portion of a channel is formed in the upper board to provide a path causing plasma components separated by the membrane from blood to move in one direction; and a lower board in which another portion of the channel is formed, where the lower board is configured to join with the upper board to form the channel, and the lower board is configured to cause the plasma components to move along the channel due to capillary forces at a position corresponding to one side of a lower surface of the membrane. By using such corpuscle separation chip, each of the edges of the membrane can maintain as much non-contact as possible with the structure formed by an upper board and a lower board attached to each other, to prevent leakage of the loaded blood in undesired directions.

## Description

### BACKGROUND

The present invention relates to a blood corpuscle separation chip, more particularly to a blood corpuscle separation chip capable of separating plasma from blood using capillary forces without causing leakage of the blood in undesired directions.

Currently in the biochemical industry, much research and numerous products are focused on point-of-care (POC) equipment and lab-on-a-chip (LOC) technology (lab-on-a-chip technology refers to technology for diagnosing various diseases simultaneously by means of a small chip). Such POC equipment and LOC technology are widely being used for biochemical testing on biological samples such as blood, etc.

Blood (whole blood) is composed of corpuscle components of red corpuscles, white corpuscles, platelets, etc., and plasma components of water, proteins, fats, carbohydrates, mineral ions, etc. In blood, the formed elements of the corpuscle components are effective components which influence analysis results, and therefore, in order to obtain accurate results, it is necessary to conduct a test using only the plasma components, to exclude the effects of the corpuscle components.

To this end, a bulky centrifuge is used in the related art to separate the plasma from the corpuscles in blood. Although this can definitely separate the blood, it involves several complicated procedures, consumes a large amount of time, and requires specialized knowledge and expertise, so that it would be very difficult to apply to products intended for use by an ordinary person.

Also, since it is needed to collect blood and separate the plasma from the corpuscles before analysis, there are also problems relating to the large amount of blood required, and the power for operating the centrifuge.

The information in the background art described above was obtained by the inventors for the purpose of developing the present invention or was obtained during the process of developing the present invention. As such, it is to be appreciated that this information did not necessarily belong to the public domain before the patent filing date of the present invention.

### SUMMARY

An aspect of the present invention is to provide a blood corpuscle separation chip that is capable of increasing the recovery rate of plasma components separated through a membrane from corpuscle components in a blood sample.

Another aspect of the present invention is to provide a blood corpuscle separation chip in which the membrane is arranged such that one or more of its edges maintain non-contact with the structure formed by an upper board and a lower board attached to each other, in order to prevent leakage of the loaded blood in undesired directions.

Also, another aspect of the present invention is to provide a blood corpuscle separation chip in which fine channels in the scale of several micrometers are implemented in the same cross sectional area, to maximize the effect of collecting plasma by high capillary forces.

Another aspect of the invention is to provide a blood corpuscle separation chip that can utilize a blood collection structure which can be joined to the board structure and which can facilitate the collection and loading of blood while preventing leakage in undesired directions.

Another aspect of the invention is to provide a blood corpuscle separation chip that can utilize a blood collection structure which can be joined to the board structure, so that it is easier to manufacture both the board structure and the collection structure, and the board structure can be shaped in various forms for joining with respect to the blood collection structure.

One aspect of the present invention provides a corpuscle separation chip comprising: an upper board for securing a membrane such that one or more edges maintain non-contact, where a portion of a channel is formed in the upper board to provide a path causing plasma components separated by the membrane from blood to move in one direction; and a lower board in which another portion of the channel is formed, where the lower board is configured to join with the upper board to form the channel, and the lower board is configured to cause the plasma components to move along the channel due to capillary forces at a position corresponding to one side of a lower surface of the membrane.

The upper board can include: a reaction channel part through which plasma components separated by the membrane move; a washing part that has one end connected to the reaction channel part and is configured to be filled with the plasma components passed through the reaction channel part; a filter securing guide configured to secure the membrane in a correct position in a blood injection opening, where the blood injection opening is configured to expose a portion of an upper surface of the membrane to an exterior to allow an injection of the blood through the upper surface of the membrane; and a filter bending bar configured to bend upwards an edge of the membrane in a direction facing the reaction channel part within the blood injection opening.

The upper board can further include a washing part hole connected to the other end of the washing part and configured to guide a movement of the plasma components.

The lower board can include: a first fine channel part, in which a plurality of first fine channels are formed in a protruding manner and are arranged with a width decreasing along a movement direction of the plasma components in correspondence with a position of the blood injection opening, where the first fine channel part contacts one side of a lower surface of the membrane; and a second fine channel part in which a plurality of second fine channels are formed in a protruding manner in correspondence with a position of the washing part.

The plurality of first fine channels can have a width decreasing along a movement direction of the plasma components so as to promote an inflow of the plasma components into the reaction channel part.

The plurality of second fine channels can be arranged with a width increasing along a movement direction of the plasma.

One or more filter guide holes can be formed around the first fine channel part, and one or more of edges of the membrane of the other direction can be placed over the filter guide holes so as to minimize contact with the lower board.

An attachment wall can be formed on the upper board, surrounding the blood injection opening, the reaction channel part, and the washing part, and the attachment wall can have its lower surface adjoining and attached to the lower board.

A channel surface of the reaction channel part and a lower surface of the attachment wall can have a level difference such that attaching the upper board and the lower board forms a channel wall.

The filter securing guide and a lower surface of the attachment wall can have a level difference such that blood lost at the membrane is prevented from moving through the attachment wall.

The filter bending bar and a lower surface of the attachment wall can have a level difference so as to prevent lost blood from moving in a direction of the attachment wall in a space formed by the filter bending bar and an upper surface of the membrane adjoining each other.

In the lower board, a guide channel part can be formed, which is connected to one end of the first fine channel part where the width is decreased, so as to guide plasma components separated by the membrane to the reaction channel part. The guide channel part can include a fine channel by which to reduce surface tension in a section connecting to the reaction channel part. Also, it is possible for the guide channel part not to have a level difference between an upper surface of the guide channel and a lower surface of the upper board so that there is a reduction in volume of fluid at the section connecting to the reaction channel part.

Another aspect of the present invention provides a corpuscle separation chip comprising: a blood collection structure configured to collect blood in a blood injection channel formed along an up-down direction and separate the blood into plasma components and corpuscle components; and a board structure, to which the blood collection structure is joined, and in which a channel is formed for providing a path causing the plasma components to move in one direction due to capillary forces.

The blood collection structure can include: a membrane configured to separate the blood into the plasma components and the corpuscle components; and a blood injection channel part, in which are formed an arch-shaped support frame and a blood injection channel formed at a center portion of the support frame and configured to draw in the blood by capillary forces.

A filter insertion groove and a board joining part can be formed in far ends of the support frame, the filter insertion groove configured to receive the membrane inserted therein, and the board joining part configured for joining with the board structure.

The board structure can include: an upper board that includes a reaction channel part, through which plasma components separated by the membrane move, and a washing part, which has one end connected to the reaction channel part and which is configured to be filled with the plasma components passed through the reaction channel part; and a lower board that includes a first fine channel part, in which a plurality of first fine channels are formed in a protruding manner and arranged with a width decreasing along a movement direction of the plasma components in correspondence with a position of the blood injection opening, where the first fine channel part contacts one side of a lower surface of the membrane, a second fine channel part in which a plurality of second fine channels are formed in a protruding manner in correspondence with a position of the washing part, and a sampler joining part formed on either side of the first fine channel part.

The upper board can further include a washing part hole connected to the other end of the washing part and configured to guide a movement of the plasma components.

At a lower end of the blood injection channel part, filter pressing pieces can be formed in an inverted Y shape on either side with respect to the blood injection channel, the filter pressing pieces configured to place the membrane in close contact with the first fine channel part by applying pressing forces downward onto the membrane inserted in the filter insertion groove.

The filter pressing pieces can be arranged perpendicularly to a movement direction of the plasma components such that the pressing forces are applied on positions on an upper surface of the membrane corresponding to a perimeter area on either side of the first fine channel part.

Alternatively, the filter pressing pieces can be arranged parallel to a movement direction of the plasma components such that the pressing forces are applied on positions on an upper surface of the membrane corresponding to a front end and rear end of the first fine channel part.

The sampler joining part can be formed as a press-fit projection of a particular thickness and height, and the board joining part can be formed as a press-fit indentation of a thickness and depth corresponding to the press-fit projection, so as to enable a press-fit coupling between the board structure and the blood collection structure.

Additional aspects, features, and advantages, other than those described above, will be apparent from the claims and written description below.

According to certain embodiments of the present invention, the recovery rate of the plasma components separated from blood through a membrane can be increased, to maximize antigen-antibody reactions and thereby enhance the sensitivity of the diagnosis chip.

Also, each edge of the membrane can be made to maintain non-contact as much as possible with the structure composed of an upper board and a lower board attached together, so as to prevent leakage of the loaded blood in undesired directions.

Also, fine channels in the scale of several micrometers can be implemented in the same cross sectional area, to maximize the effect of collecting plasma by high capillary forces.

Also, by utilizing a blood collection structure that can be joined to the board structure, the collection and loading of blood can be facilitated, while leakage in undesired directions can be prevented.

Also, since a blood collection structure that can be joined to the board structure, it may be easier to manufacture both the board structure and the collection structure, and the board structure may be shaped in various forms for joining with respect to the blood collection structure.

### BRIEF DESCRIPTION OF THE DRAWINGS

Figure 1 is a plan view of the upper board of a corpuscle separation chip according to an embodiment of the present invention.
Figure 2 is a perspective view of the upper board of Figure 1 as seen from below.
Figure 3 is a plan view of the lower board of a corpuscle separation chip according to an embodiment of the present invention.
Figure 4 is a perspective view of the lower board of Figure 3 as seen from above.
Figure 5 and Figure 6 are a plan view and a perspective view, respectively, of the upper board and the lower board of a corpuscle separation chip coupled together according to an embodiment of the present invention.
Figure 7 is a plan view of the lower board of a corpuscle separation chip according to another embodiment of the present invention.
Figure 8 is a plan view of the upper board of a corpuscle separation chip according to another embodiment of the present invention.
Figure 9 and Figure 10 are a perspective view and a side-elevational view, respectively, of a first embodiment of a sampler, included in a corpuscle separation chip according to another embodiment of the present invention.
Figure 11 is a perspective view of a board structure, which is composed of a lower board and an upper board attached together, coupled with a sampler, into which a membrane has been inserted, in a corpuscle separation chip according to another embodiment of the present invention.
Figure 12 illustrates the position of the membrane when a board structure and a sampler are coupled together according to another embodiment of the present invention.
Figure 13 and Figure 14 are a perspective view and a side-elevational view, respectively, of a second embodiment of a sampler, included in a corpuscle separation chip according to another embodiment of the present invention.

### DETAILED DESCRIPTION

As the present invention allows for various changes and numerous embodiments, particular embodiments will be illustrated in the drawings and described in detail in the written description. However, this is not intended to limit the present invention to particular modes of practice, and it is to be appreciated that all changes, equivalents, and substitutes that do not depart from the spirit and technical scope of the present invention are encompassed in the present invention. In the written description, certain detailed explanations of related art are omitted when it is deemed that they may unnecessarily obscure the essence of the present invention.

While such terms as "first" and "second," etc., may be used to describe various components, such components must not be limited to the above terms. The above terms are used only to distinguish one component from another.

The terms used in the present specification are merely used to describe particular embodiments, and are not intended to limit the present invention. An expression used in the singular encompasses the expression of the plural, unless it has a clearly different meaning in the context. In the present specification, it is to be understood that the terms "including" or "having," etc., are intended to indicate the existence of the features, numbers, steps, actions, components, parts, or combinations thereof disclosed in the specification, and are not intended to preclude the possibility that one or more other features, numbers, steps, actions, components, parts, or combinations thereof may exist or may be added.

In the written description, certain detailed explanations of related art are omitted, when it is deemed that they may unnecessarily obscure the essence of the invention.

With regards the present invention, when a blood sample initially obtained is stored in a tube applied with an anticoagulant, fibrinogen is not removed from the blood sample. When this blood sample is used, plasma passes through the membrane. However, if a blood sample is stored in a tube that is not applied with an anticoagulant, blood coagulation occurs after a certain amount of time, and it is possible to remove fibrin (an insoluble protein produced by the enzyme thrombin acting on fibrinogen) by stirring the coagulated blood with a thin stick. When this blood sample is used, serum passes through the membrane.

For better understanding and easier explanation, the present specification will assume that plasma components, which is a term used to encompass both plasma and serum described above, pass through a membrane and move along a particular path. Embodiments of the present invention will be described below in more detail with reference to relevant drawings.

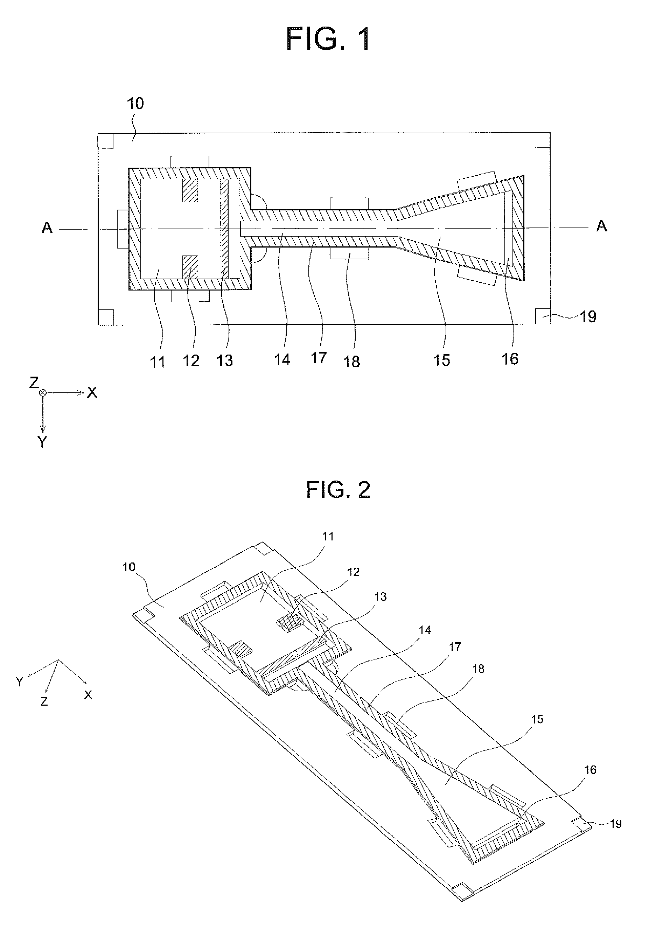

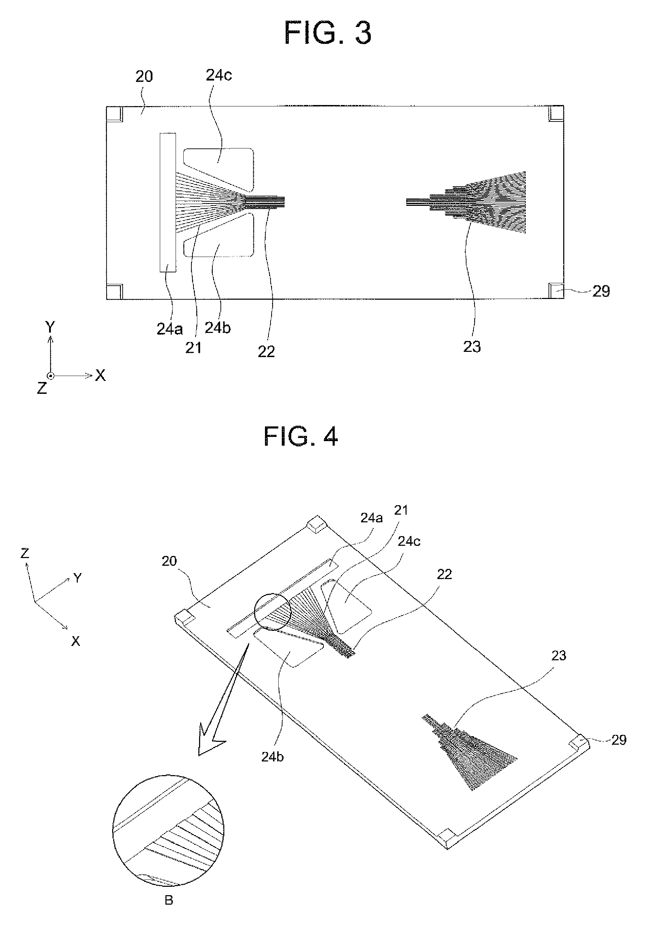

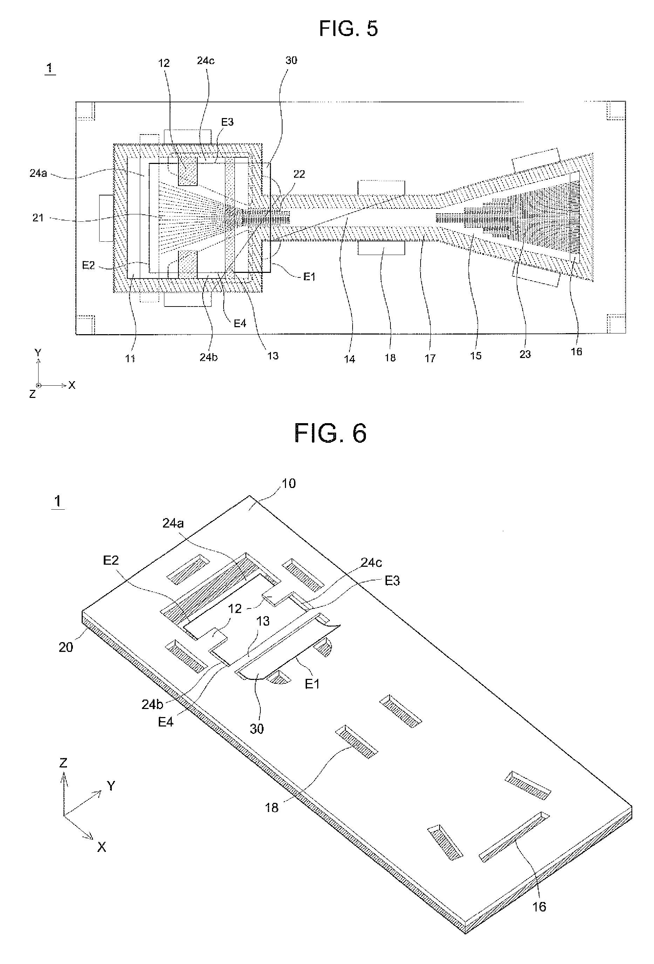

Figure 1 is a plan view of the upper board of a corpuscle separation chip according to an embodiment of the present invention; Figure 2 is a perspective view of the upper board of Figure 1 as seen from below; Figure 3 is a plan view of the lower board of a corpuscle separation chip according to an embodiment of the present invention; Figure 4 is a perspective view of the lower board of Figure 3 as seen from above; and Figure 5 and Figure 6 are a plan view and a perspective view, respectively, of the upper board and the lower board of a corpuscle separation chip coupled together according to an embodiment of the present invention. Illustrated in Figure 1 through Figure 6 are a corpuscle separation chip 1, an upper board 10, a lower board 20, a membrane 30, a blood injection opening 11, a reaction channel part 14, a washing part 15, a washing part hole 16, filter securing guides 12, a filter bending bar 13, a first fine channel part 21, a second fine channel part 23, a guide channel part 22, filter guide holes 24a, 24b, 24c, alignment indentations 19, and alignment protrusions 29.

In a corpuscle separation chip 1 according to this embodiment, the membrane 30 may be used to separate corpuscle components, which are an inhibiting factor in a diagnosis using blood, while the upper board 10 and lower board 20 may be attached together to provide a path along which plasma components separated by the membrane 30 can move in one direction.

The plasma components may be collected at the first fine channel part 21, which contacts one side of a lower surface of the membrane 30, proceed through the guide channel part 22 by way of capillary forces into the reaction channel, which is formed by the reaction channel part 14 of the upper board 10 and an upper surface of the lower board 20, and move into the paths that lead to the second fine channel part 23 located in the washing part 15. Here, the reaction channel part 14 and washing part 15 formed in the upper board 10 may correspond to a portion of the channel for providing a movement path for the plasma components, while the first fine channel part 21, guide channel part 22, and second fine channel part 23 formed in the lower board 20 may correspond to another portion of the channel.

The membrane 30 may be shaped such that the upper side and the lower side are asymmetrical, with the pores forming the membrane 30 having smaller sizes from the top towards the bottom. Thus, as components having different sizes within the blood move downwards of the membrane 30 according to the sizes of the pores, corpuscles may be caught on pores of particular sizes, so that ultimately, the plasma components may be sieved with the corpuscles separated. The material of the membrane 30 can be, for example, polysulfone.

The plasma components separated by the membrane 30 may move along the channels formed by the attachment of the upper board 10 and the lower board 20, even without any exterior power applied, by way of capillary forces provided by the channel structure described later in more detail, whereby the recovery rate may be increased. Thus, in cases where a biological reagent is coated within the reaction channel part 14, the antigen-antibody reactions with the biological reagent can be maximized, and thus the sensitivity of the diagnosis chip can be enhanced.

In the upper board 10, there may be formed a blood injection opening 11, through which blood may be injected, a reaction channel part 14, which may serve as a passageway for the plasma components separated by the membrane 30 moving by way of capillary forces, and a washing part 15, which may be filled by the plasma components passed through reaction channel part 14. A washing part hole 16 can also be formed, which may be connected to a far end of the washing part 15 to create pressure and air flow within the channels.

The blood injection opening 11, reaction channel part 14, washing part 15, and washing part hole 16 may be surrounded by an attachment wall 17 of a particular height; and when the upper board 10 and the lower board 20 are attached together, a lower surface of the attachment wall 17, i.e. an attachment surface, may adjoin and be attached to the lower board 20. The attachment surface and the channel surface of the reaction channel part 14 may form a level difference, so that the attachment wall 17 may form channel walls when the upper board 10 and the lower board 20 are later attached together.

At one or more position along the perimeter of the attachment wall 17, an adhesive injection part 18 can be formed, in which to inject an adhesive when attaching the upper board 10 with the lower board 20. The edges of the attachment surface can be finely rounded, so that the adhesive may enter more easily. Various methods can be used as the attachment method, such as ultrasonic bonding, thermal bonding, pressure bonding, etc.

The material for the upper board 10 and lower board 20 can be, for example, a polyethylene derivative such as polycarbonate (PC), polystyrene (PS), polypropylene (PP), polyethylene terephthalate (PET), etc., poly(methyl methacrylate) (PMMA), or an acryl-based plastic, etc.; while the adhesive can be an arbitrary organic solvent capable of dissolving the board material, where ketones, aromatic hydrocarbons, halogenated hydrocarbons, or a mixture thereof can be used, or more preferably, acetone, cyanoacrylate, chloroform, methylene chloride or carbon tetrachloride, or a mixture thereof can be used.

The blood injection opening 11 may be formed perforated in a position where the membrane 30 is to be placed, i.e. a position corresponding to the first fine channel part 21 of the lower board 20, thereby uncovering the membrane 30 and allowing blood to be loaded onto the upper surface of the membrane 30 placed on the lower board 20.

Filter securing guides 12, which can secure the membrane 30 at a predetermined position when it is placed in the blood injection opening 11, may be formed around an inside of the blood injection opening 11. Although the drawings illustrate an example in which multiple filter securing guides 12 are positioned in the upper board facing each other with respect to the line A-A, which is the central axis along the direction in which the plasma components move, the scope of the present invention is not thus limited.

Since a greater area of contact between the filter securing guides 12 and the upper surface of the membrane 30 could mean that a greater amount of blood is lost, the filter securing guides 12 can be formed with minimized areas themselves or with minimized areas of contact with the membrane 30.

Also, the filter securing guides 12 can have a level difference with the attachment surface, so as to prevent lost blood from leaking or moving through the attachment surface.

In order to prevent an edge (E1) corresponding to one end of the membrane 30 from touching the reaction channel part 14 and prevent movement of blood, one end of the membrane 30 facing the reaction channel part 14 may be bent upwards by the filter bending bar 13 such that an edge (E1) corresponding to one end of the membrane 30 maintains non-contact with the upper board 10. The filter bending bar 13 can also be formed with a minimum area and may have a level difference with the attachment surface to prevent lost blood from moving in the direction of the attachment surface at portions touching the upper surface of the membrane 30.

The reaction channel part 14 may form reaction channels in the movement path with the upper surface of the lower board 20, and may serve as a passageway for the plasma components having the corpuscle components separated by the membrane 30. The flow velocity of the plasma components can vary according to any one of a length, width, height, and volume of the reaction channel part 14.

If a biological reagent is present in the reaction channel part 14, antigen-antibody reactions may occur, and assaying can be performed by biological treatments. For example, for a flow of plasma components that have passed through the membrane 30, after the lower board 20 was evenly coated with primary capture antibodies, antigens included in the plasma components would bond with the primary capture antibodies. The assaying can be performed by reacting the antigens captured by the primary capture antibodies with secondary antibodies that are indicated with fluorescent material and coated in the reaction channel part 14.

The washing part 15 may be connected at one end with the reaction channel part 14 and may provide a space which may gather and be filled with the plasma components that have moved through the reaction channel part 14. The flow velocity can be changed by adjusting one or more of a length, width, height, and volume of the washing part 15. Also, the washing part 15, by way of a level difference with the reaction channel part 14, can increase the capillary forces.

This is because, when the plasma components move as a limited volume of fluid, both a head pressure and capillary forces are applied, and the greater the length of the washing part 15, the lower the head pressure applied on the front (head) of the plasma components, creating difficulty in movement. In this case, by decreasing the widths of the channels towards the movement direction of the plasma components, or reducing the height, i.e. the level difference, the capillary forces can be increased, to facilitate the movement. Thus, the washing part 15 can be provided with a volume larger than the overall fluid quantity of the plasma components separated by the membrane 30, and can be provided with as large a surface area as possible, to thereby increase the capillary forces.

The washing part hole 16 may be a perforated hole formed connected to the other end of the washing part 15, and may create pressure and air flow within the channels, to induce a movement of the plasma components towards the washing part 15.

On one side of the lower board 20, a first fine channel part 21 may be formed in a protruding manner, with its width decreasing along the movement direction of the plasma components, i.e. along the direction of the +X axis, and on the other side of the lower board 20, a second fine channel part 23 may be formed in a protruding manner, with its width increasing along the movement direction of the plasma components.

The first fine channel part 21 may be formed in the position where the membrane 30 is to be placed, i.e. at a position corresponding to the blood injection opening 11 of the upper board 10, and may be formed as a relief structure that can contact the lower surface of the membrane 30 (see B of Figure 4). The plasma components sieved through the membrane 30 may be given directionality and converged towards the reaction channel part 14 by means of the capillary forces, whereby the dead volume of the plasma components may be reduced.

The first fine channel part 21 may be composed of multiple fine channels arranged in a shape, such as a fan-like shape, which has its width decreasing along the movement direction of the plasma components until the width is the same as that of the reaction channel part 14, to promote inflow into the reaction channel part 14; where the efficiency may vary according to one or more of the gap between each fine channel and the height. For example, in a fluid flow using capillary forces, a greater efficiency is obtained by increasing the surface area, and thus, up to a certain threshold point, it would be more efficient to decrease the gap between each fine channel and thereby increase surface area.

By performing a surface reformation operation (e.g. plasma treatment) on the first fine channel part 21, the creation of capillary forces can be controlled according to the properties of the surface material. For the same amount of volume, the size of the fine channels in the first fine channel part 21 may be very small compared to other channels, being in the scale of several micrometers. This may increase the surface area within the channels, increase the capillary forces, and promote the recovery of plasma components to a higher yield compared to the amount of blood, so that even if a small amount of plasma components are sieved, these can easily enter the reaction channel part 14.

In the lower board 20, a guide channel part 22 can be additionally formed, which is connected to one end of the first fine channel part 21 and which guides the plasma components separated through the membrane 30 to the reaction channel part 14. The guide channel part 22 may be formed with substantially the same or similar shape and same size as the fine channels forming the first fine channel part 21, to serve as an extension of the first fine channel part 21.

When attaching the upper board 10 with the lower board 20, the upper surfaces of the guide channel walls which divide the guide channels of the guide channel part 22 can be implemented such that there is no level difference with the lower surface of the upper board 10. In this case, there may be a small volume filled in the same section, so that the plasma components may be easily guided to the reaction channel part 14 even if there is only a small amount.

The second fine channel part 23 may be implemented with multiple fine channels such that the plasma components that have passed through the reaction channel part 14 can quickly and easily enter the washing part 15. As the second fine channel part 23 may be filled with the plasma components sieved through the membrane 30, it may be shaped to accommodate a large volume. For example, the second fine channel part 23 may include multiple fine channels arranged in a fan-like shape with the width increasing along the movement direction of the plasma components, to maximize capillary forces. As the capillary forces are maximized, the plasma components can be filled up to a maximum area (e.g. to the far end of the second fine channel part 23).

In order that the edges of the membrane 30 other than the edge bent upwards by the filter bending bar 13 may contact the lower board 20 as little as possible, one or more filter guide holes 24a, 24b, 24c can be formed around the first fine channel part 21. This is to prevent leakage, since an edge, i.e. a cut side, of the membrane 30 touching the structure of the lower board 20 or/and upper board 10 can cause the blood loaded on the upper surface of the membrane 30 to leak via the hydrophilic surface.

Also, if the blood loaded on the upper surface of the membrane 30 touches the structure of the lower board 20 or/and upper board 10, there is a possibility of the blood seeping into the lower surface side of the membrane 30 and of the blood seeped into the lower surface of membrane 30 entering the reaction channel part 14. Since only the plasma components sieved by the membrane 30 should be present in the lower surface of the membrane 30, one or more of the filter guide holes 24a, 24b, 24c can be formed to eliminate the occurrence of blood seeping into and enter the reaction channel part 14.

Thus, the filter guide holes 24a, 24b, 24c may prevent blood from flowing to other portions, even when an excessive amount of blood is injected over the membrane 30, and may minimize the area by which the membrane 30 touches the board structure, particularly the lower board 20, so that the sieved plasma components can be concentrated on the first fine channel part 21 contacting the lower surface of the membrane 30.

Although the shapes of the filter guide holes 24a, 24b, 24c are illustrated as a rectangular shape elongated in the Y axis direction and two trapezoidal shapes symmetric about a middle of the first fine channel part 21, this is merely one example, and it is sufficient if the shapes are such that results in minimum contact between the other edges of the membrane 30 and the lower board 20.

Referring to Figure 5 and Figure 6, a first edge (E1) of the membrane 30 may be bent upwards (+Z axis), a second edge (E2) may be positioned over a first filter guide hole 24a, and a third edge (E3) and a fourth edge (E4) may mostly be positioned over a second and a third filter guide hole 24b, 24c, so that each edge of the membrane 30 may maintain as much non-contact as possible with the board structure, i.e. the upper board 10 and lower board 20.

In attaching the upper board 10 and the lower board 20, the upper board 10 and lower board 20 can be arranged in the correct positions for attachment by using alignment indentations 19 and alignment protrusions 29. While the drawings depict the alignment indentations 19 as being formed in the upper board 10 and the alignment protrusions 29 as being formed in the lower board 20, another embodiment can have the alignment protrusions formed in the upper board and the alignment indentations formed in the lower board, while another embodiment can have the alignment indentations and alignment protrusions formed alternatingly on the upper board and lower board.

In this embodiment, the membrane 30 can be inserted before or after the upper board 10 and lower board 20 are attached.

In cases where the membrane 30 is to be inserted before the upper board 10 and lower board 20 are attached, filter securing guides 12 can be used which do not require a chemical/physical action such as those using bonding, organic solvents, pressure, heating, etc., so as to provide the effects of removing elements that may alter the properties of the membrane 30 and maximizing blood separation.

Alternatively, in cases where the membrane 30 is to be inserted after the upper board 10 and lower board 20 are attached, elements that may alter the properties of the membrane 30 can be avoided completely, and the filter securing guides 12 can be given a level difference with the attachment surface, for easy insertion and securing.

In this embodiment, a plasma treatment can be applied to the upper board 10 and lower board 20. This can reduce the surface tension caused by the small structural sizes of the fine channels and reform the surfaces in the micrometer-scale channels, such as those of the reaction channel part 14, etc., to be more hydrophilic, and thereby increase capillary forces and allow a smoother flow for the plasma components.

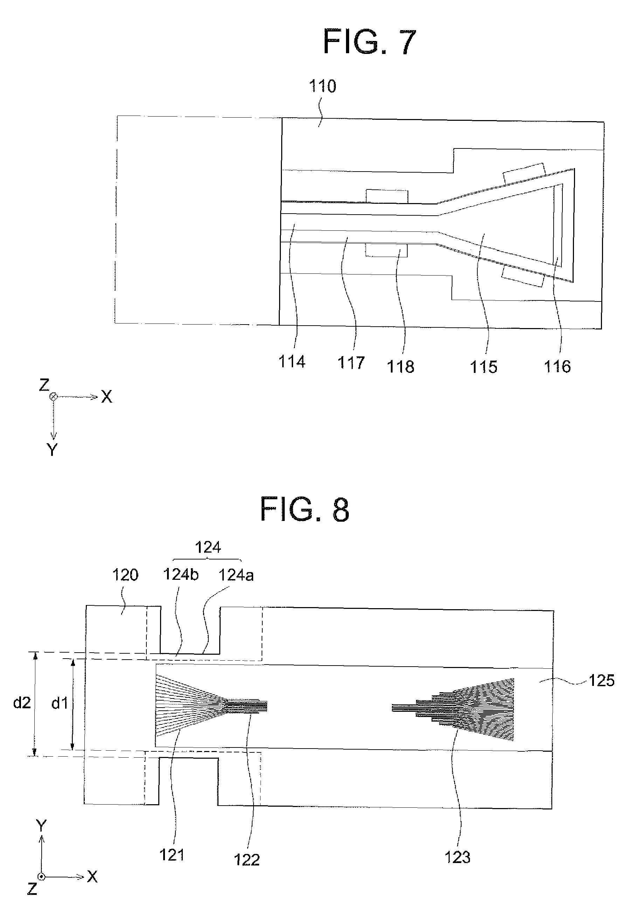

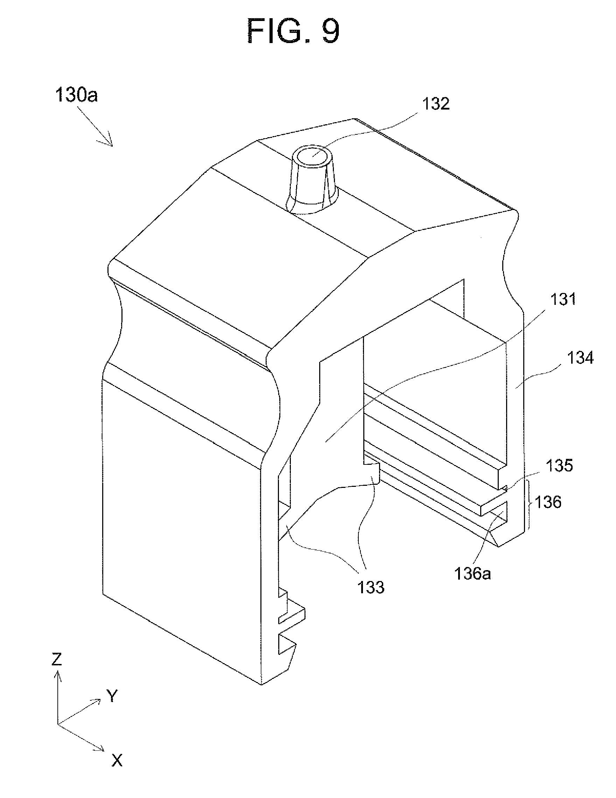

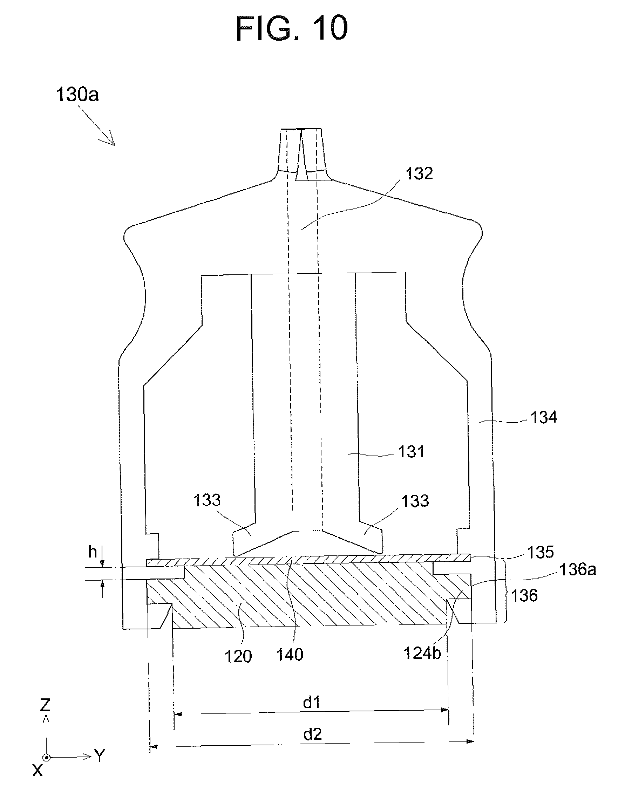

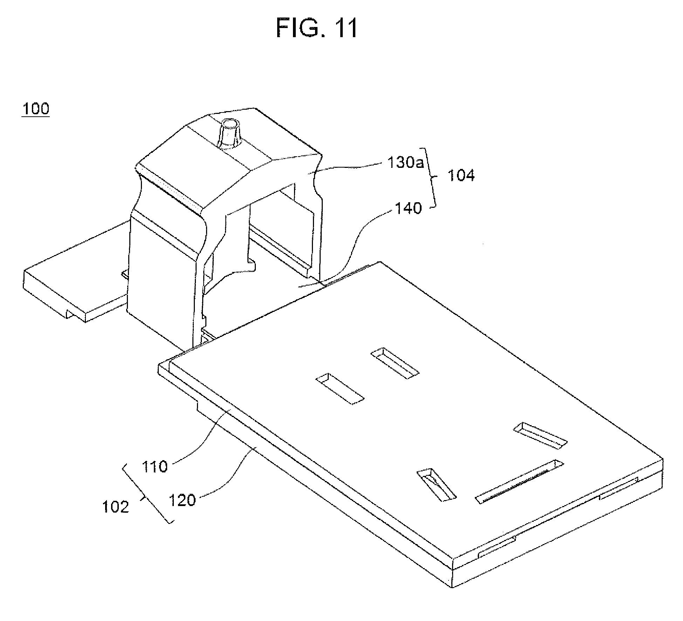

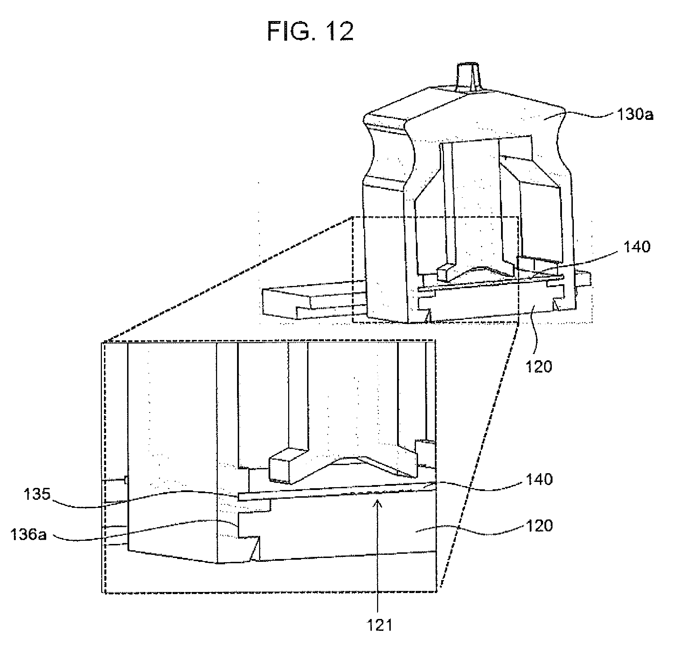

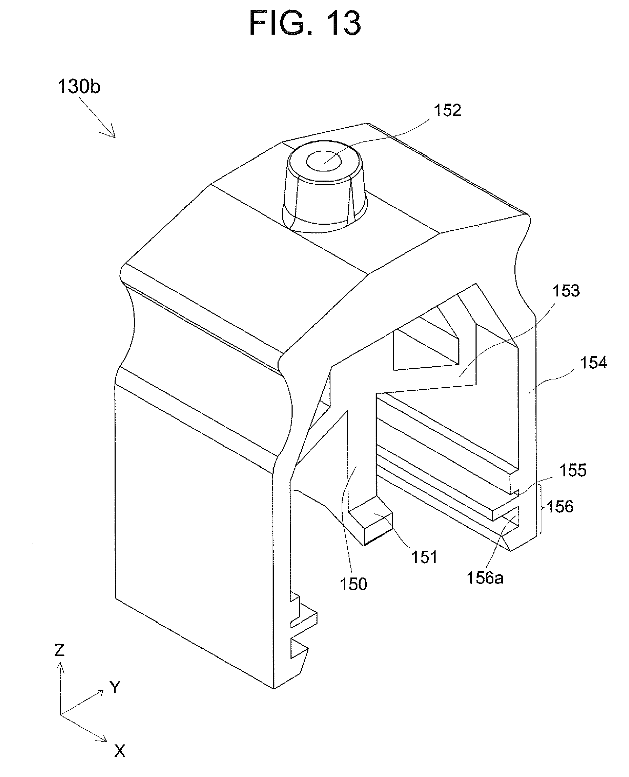

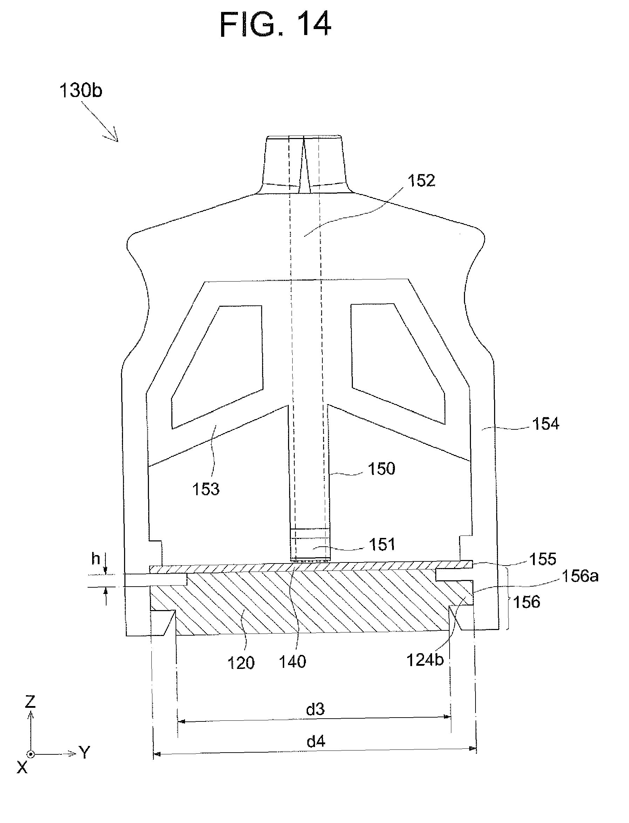

Figure 7 is a plan view of the lower board of a corpuscle separation chip according to another embodiment of the present invention; Figure 8 is a plan view of the upper board of a corpuscle separation chip according to another embodiment of the present invention; Figure 9 and Figure 10 are a perspective view and a side-elevational view, respectively, of a first embodiment of a sampler, included in a corpuscle separation chip according to another embodiment of the present invention; Figure 11 is a perspective view of a board structure, which is composed of a lower board and an upper board attached together, coupled with a sampler, into which a membrane has been inserted, in a corpuscle separation chip according to another embodiment of the present invention; Figure 12 illustrates the position of the membrane when a board structure and a sampler are coupled together according to another embodiment of the present invention; and Figure 13 and Figure 14 are a perspective view and a side-elevational view, respectively, of a second embodiment of a sampler, included in a corpuscle separation chip according to another embodiment of the present invention. Illustrated in Figure 7 through Figure 14 are a corpuscle separation chip 100, an upper board 110, a lower board 120, a board structure 102, samplers 130, 130a, 130b, a membrane 140, a blood collection structure 104, blood injection channel parts 131, 150, blood injection channels 132, 152, filter pressing pieces 133, 151, channel support parts 153, support frames 134, 154, filter insertion grooves 135, 155, board joining parts 136, 156, board insertion grooves 136a, 156a, a reaction channel part 114, a washing part 115, a washing part hole 116, a first fine channel part 121, a second fine channel part 123, a guide channel part 122, a sampler joining part 124, recesses 124a, and press-fit projections 124b.

A corpuscle separation chip 100 according to this embodiment may include a board structure 102, in which an upper board 110 is attached to an upper side of the lower board 120, and a blood collection structure 104, in which a membrane 140 is inserted into a sampler 130. The blood collection structure 104 may allow easy injection of blood by using the sampler 130, may be joined to the board structure 102 with a particular volume of blood filled inside, may allow separation by way of the membrane 140 for the collected blood, and may cause the plasma components to enter the reaction channel part 114 through the first fine channel part 121 and move to the washing part 115.

The upper board 110 according to this embodiment, when compared to the upper board illustrated in Figures 1 and 2, is structured with the blood injection opening 11, filter securing guides 12, and filter bending bar 13 removed.

In the upper board 110, there may be formed a reaction channel part 114, which may serve as a passageway for the plasma components separated by the membrane 140 moving by way of capillary forces, and a washing part 115, which may be filled by the plasma components passed through reaction channel part 114. A washing part hole 116 can also be formed, which may be connected to a far end of the washing part 115 to create pressure and air flow within the channels.

The reaction channel part 114, washing part 115, and washing part hole 116 may be surrounded by an attachment wall 117 of a particular height; and when the upper board 110 and the lower board 120 are attached together, a lower surface of the attachment wall 117, i.e. an attachment surface, may adjoin and be attached to the lower board 120. The attachment surface and the channel surface of the reaction channel part 114 may form a level difference, so that the attachment wall 117 may form channel walls when the upper board 110 and the lower board 120 are later attached together.

At one or more position along the perimeter of the attachment wall 117, an adhesive injection part 118 can be formed, in which to inject an adhesive when attaching the upper board 110 with the lower board 120. The edges of the attachment surface can be finely rounded, so that the adhesive may enter more easily. Various methods can be used as the attachment method, such as ultrasonic bonding, thermal bonding, pressure bonding, etc.

The reaction channel part 114 may form reaction channels in the movement path with the upper surface of the lower board 120, and may serve as a passageway for the plasma components having the corpuscle components separated by the membrane 140.

The flow velocity of the plasma components can vary according to any one of a length, width, height, and volume of the reaction channel part 114.

Also, a biological reagent may be coated in the reaction channel part 114, so that antigen-antibody reactions may occur, and assaying can be performed by biological treatments.

The washing part 115 may be connected at one end with the reaction channel part 114 and may provide a space which may gather and be filled with the plasma components that have moved through the reaction channel part 114. The flow velocity can be changed by adjusting one or more of a length, width, height, and volume of the washing part 115. The washing part 115, by way of a level difference with the reaction channel part 114, can increase the capillary forces.

The washing part hole 116 may be a perforated hole formed connected to the other end of the washing part 115, and may create pressure and air flow within the channels, to induce a movement of the plasma components towards the washing part 115.

On one side of the lower board 120, a first fine channel part 121 may be formed in a protruding manner, with its width decreasing along the movement direction of the plasma components, i.e. along the direction of the +X axis, and on the other side of the lower board 120, a second fine channel part 123 may be formed in a protruding manner, with its width increasing along the movement direction of the plasma components.

The first fine channel part 121 may be formed in the position where the membrane 140 is to be placed, i.e. at a position where the sampler 130 is to be joined, and may be formed as a relief structure that contacts the lower surface of the membrane 140. The plasma sieved through the membrane 140 may be given directionality and converged towards the reaction channel part 114 by means of capillary forces.

The first fine channel part 121 may be composed of multiple fine channels arranged in a shape, such as a fan-like shape, which has its width decreasing along the movement direction of the plasma components until the width is the same as that of the reaction channel part 114, to promote inflow into the reaction channel part 114; where the efficiency may vary according to one or more of the gap between each fine channel and the height.

On either side of the first fine channel part 121, a sampler joining part 124 may be formed which allows a blood collection structure 104, particularly a sampler 130, to be coupled on. The sampler joining parts 124 may be joined with the board joining parts 136 of the sampler 130, which will be described later in more detail, to secure and couple the sampler 130 at a particular position. Various joining methods can be used according to the shapes of the sampler joining parts 124 and board joining parts 136.

The gap (d2) between the sampler joining parts 124 may correspond to the gap (d2) between the board joining parts 136 formed between both ends of the support frame 134 of the sampler 130. Thus, if the width of the lower board 120 is relatively larger than the gap between both ends of the support frame 134 of the sampler 130, a structure can be used in which the board edges of the lower board 120 at positions corresponding to either side of the first fine channel part 121 are recessed towards the first fine channel part 121, with the sampler joining part 124 formed in the recesses.

By performing a surface reformation operation (e.g. plasma treatment) on the first fine channel part 121, the creation of capillary forces can be controlled according to the properties of the surface material.

For the same amount of volume, the size of the fine channels in the first fine channel part 121 may be very small compared to other channels, being in the scale of several micrometers. This may increase the surface area within the channels, increase the capillary forces, and promote the recovery of plasma components to a higher yield compared to the amount of blood, so that even if a small amount of plasma components are sieved, these can easily enter the reaction channel part 114.

In the lower board 120, a guide channel part 122 can be additionally formed, which is connected to one end of the first fine channel part 121 and which guides the plasma components separated through the membrane 140 to the reaction channel part 114. The guide channel part 122 may be formed with substantially the same or similar shape and same size as the fine channels forming the first fine channel part 121, to serve as an extension of the first fine channel part 121.

When attaching the upper board 110 with the lower board 120, the upper surfaces of the guide channel walls which divide the guide channels of the guide channel part 122 can be implemented such that there is no level difference with the lower surface of the upper board 110. In this case, there may be a small volume filled in the same section, so that the plasma components may be easily guided to the reaction channel part 114 even if there is only a small amount.

The second fine channel part 123 may be implemented with multiple fine channels such that the plasma components that have passed through the reaction channel part 114 can quickly and easily enter the washing part 115. As the second fine channel part 123 may be filled with the plasma components sieved through the membrane 140, it may be shaped to accommodate a large volume. For example, the second fine channel part 123 may include multiple fine channels arranged in a fan-like shape with the width increasing along the movement direction of the plasma components, to maximize capillary forces. As the capillary forces are maximized, the plasma components and biological reagents can be filled up to a maximum area (e.g. to the far end of the second fine channel part 123).

The upper board 110 and the lower board 120 may be attached such that the washing part 115 and the second fine channel part 123 correspond to each other, and thereby may form the board structure 102. In attaching the upper board 110 and the lower board 120, the upper board 110 and lower board 120 can be arranged in the correct positions for attachment by using alignment indentations and alignment protrusions.

The blood collection structure 104 may include a sampler 130, which may receive and hold injected blood, and a membrane 140, which may be fitted onto a lower end of the sampler 130. The membrane 140 is the same as the membrane 30 described earlier with reference to Figure 5 and Figure 6, and thus its detailed description will not be repeated.

The sampler 130 included in the blood collection structure 104 can have various embodiments, as shown below, according to the positions where the pressing forces of the pressing pieces are applied on the membrane 140.

A sampler 130a according to one embodiment may include an arch-shaped support frame 134 and a blood injection channel part 131 at a center portion of the support frame 134, as illustrated in Figure 9 and Figure 10, where the blood injection channel part 131 may have a blood injection channel 132 formed therein in an up-down direction, i.e. along the Z axis direction, into which blood is drawn in by capillary forces.

At either far end of the support frame 134, filter insertion grooves 135 may be formed, in which the membrane 140 may be inserted, and board joining parts 136 may be formed, which may couple with the sampler joining parts 124 of the lower board 120 to join the board structure 102 with the blood collection structure 104.

The drawings illustrate a press-fit projection 124b of a particular thickness and height formed in a recess 124a in the lower board 120, as an example of a sampler joining part 124, and illustrate a press-fit indentation 136a of a thickness and depth corresponding to those of the press-fit projection 124b formed on either far end of the support frame 134, as an example of a board joining part 136.

The distance between the ends of the press-fit projections 124b formed in the lower board 120 is d2, and the distance between the portions where the press-fit projections 124b begin is d1 (dl<d2). Correspondingly, the distance between the board press-fit indentations 136a may also be d2, to provide a structure in which the sampler 130a may be lowered and joined onto the lower board 120 of the board structure by a press-fitting of the press-fit projections 124b to the board press-fit indentations 136a, and the far ends of the support frame 134 at lower parts of the press-fit indentations 136a can have inclined structures with the width increasing towards the bottom, so as to allow easy press-fitting.

An upper end of the blood injection channel part 131 may protrude upwards at a center portion of the support frame 134, to receive blood injected from the outside. The injected blood may move downwards due to capillary forces, so that the blood injection channel 132 may be filled by a particular volume of blood.

Here, the blood injection channel 132 can have a chemical coating (e.g. a thrombin coating), so that fibrinogen among the blood components is activated into fibrin to create blood coagulation, and the serum collected by sieving through the membrane 140 may enter the reaction channel part 114. Alternatively, the blood injection channel 132 may not have a chemical coating, but an anticoagulant (e.g. EDTA) can be added to the blood, so that only the plasma collected by sieving through the membrane 140 may enter the reaction channel part 114.

At a lower end of the blood injection channel part 131, filter pressing pieces 133 may be formed in an inverted Y shape on either side with respect to the blood injection channel 132, perpendicularly to the movement direction of the plasma components, to apply forces in a downward direction onto a membrane 140 inserted in the filter insertion grooves 135, and allow the membrane 140 to come into close contact with the first fine channel part 121 when the sampler 130a and the board structure 102 are joined together. Here, the positions at which the pressing forces are applied by the filter pressing pieces 133 may preferably be on the upper surface of the membrane 140 corresponding to the positions on the lower surface that contact a perimeter area of the first fine channel part 121.

Due to the relief structure of the first fine channel part 121, a center portion of the membrane 140 may be given an upwardly convex shape and may draw in the blood filled in the blood injection channel 132 from the lower end of the blood injection channel 132 to begin blood separation (see Figure 12). The separated plasma components can enter the reaction channel part 114 through the first fine channel part 121 with which the membrane 140 is placed in close contact by the filter pressing pieces 133.

Here, the first fine channel part 121, guide channel part 122, and second fine channel part 123 can be positioned on an upper surface of the lower board 120 at a protruding part 125, which may protrude to a height that is substantially the same as the distance (h) between the filter insertion grooves 135 and the board insertion grooves 136a in the sampler 130a.

A sampler 130b according to another embodiment may include an arch-shaped support frame 154 and a blood injection channel part 150 at a center portion of the support frame 154, as illustrated in Figure 13 and Figure 14, where the blood injection channel part 150 may have a blood injection channel 152 formed therein in an up-down direction, i.e. along the Z axis direction, into which blood is drawn in by capillary forces.

At either far end of the support frame 154, filter insertion grooves 155 may be formed, in which the membrane 140 may be inserted, and board joining parts 156 may be formed, which may couple with the sampler joining parts 124 of the lower board 120 to join the board structure 102 with the blood collection structure 104.

The blood injection channel part 150 may be equipped with channel support parts 153 between itself and the support frame 154, to support the blood injection channel part 150 from both sides, in such a way that when it is later joined with the board structure 102, the first fine channel part 121 is positioned at a lower side of the blood injection channel part 150.

The drawings illustrate a press-fit projection 124b of a particular thickness and height formed in a recess 124a in the lower board 120, as an example of a sampler joining part 124, and illustrate a press-fit indentation 156a of a thickness and depth corresponding to those of the press-fit projection 124b formed on either far end of the support frame 154, as an example of a board joining part 156.

The distance between the ends of the press-fit projections 124b formed in the lower board 120 is d2, and the distance between the portions where the press-fit projections 124b begin is d1 (d1<d2). Correspondingly, the distance between the board press-fit indentations 156a may also be d2, to provide a structure in which the sampler 130b may be lowered and joined onto the lower board 120 of the board structure by a press-fitting of the press-fit projections 124b to the board press-fit indentations 156a, and the far ends of the support frame 154 at lower parts of the press-fit indentations 156a can have inclined structures with the width increasing towards the bottom, so as to allow easy press-fitting.

An upper end of the blood injection channel part 150 may protrude upwards at a center portion of the support frame 154, to receive blood injected from the outside. The injected blood may move downwards due to capillary forces, so that the blood injection channel 152 may be filled by a particular volume of blood. Here, the inner diameter of the blood injection channel 152 may be very small and a large surface tension may be applied, whereby the blood can be collected in the blood injection channel 152.

At a lower end of the blood injection channel part 150, filter pressing pieces 151 may be formed in an inverted Y shape on either side with respect to the blood injection channel 152, parallel to the movement direction of the plasma components. Here, the filter pressing pieces 151 may be shaped as a 90-degree rotated version of the filter pressing pieces 133 illustrated in Figure 9 and Figure 10. The filter pressing pieces 151 thus rotated by 90° can move the blood filled in the blood injection channel 152 towards the reaction channel part 114 with a smaller width.

The filter pressing pieces 151 may apply forces in a downward direction onto a membrane 140 inserted in the filter insertion grooves 155, and allow the membrane 140 to come into close contact with the first fine channel part 121 when the sampler 130b and the board structure 102 are joined together. Here, the positions at which the pressing forces are applied by the filter pressing pieces 151 may preferably be on the upper surface of the membrane 140 corresponding to the positions on the lower surface that contact a front end and a rear end of the first fine channel part 121 with respect to the movement direction of the plasma components.

Due to the relief structure of the first fine channel part 121, a center portion of the membrane 140 may be given an upwardly convex shape and may draw in the blood filled in the blood injection channel 152 from the lower end of the blood injection channel 152 to begin blood separation. The separated plasma components can enter the reaction channel part 114 through the first fine channel part 121 with which the membrane 140 is placed in close contact by the filter pressing pieces 151.

In this embodiment also, the first fine channel part 121, guide channel part 122, and second fine channel part 123 can be positioned on an upper surface of the lower board 120 at a protruding part 125, which may protrude to a height that is substantially the same as the distance (h) between the filter insertion grooves 155 and the board insertion grooves 156a in the sampler 130b.

While the present invention has been described with reference to particular embodiments, it is to be appreciated that various changes and modifications can be made by those skilled in the art without departing from the spirit and scope of the present invention as defined by the scope of claims set forth below.

## Claims

1. A corpuscle separation chip comprising:
an upper board for securing a membrane such that one or more edges maintain non-contact, the upper board having a portion of a channel formed therein to provide a path causing plasma components separated by the membrane from blood to move in one direction; and
a lower board having another portion of the channel formed therein, the lower board configured to join with the upper board to form the channel, the lower board configured to cause the plasma components to move along the channel due to capillary forces at a position corresponding to one side of a lower surface of the membrane.

2. The corpuscle separation chip of claim 1, wherein the upper board comprises:
a reaction channel part having plasma components separated by the membrane move therethrough;
a washing part having one end thereof connected to the reaction channel part and configured to be filled with the plasma components passed through the reaction channel part;
a filter securing guide configured to secure the membrane in a correct position in a blood injection opening, the blood injection opening configured to expose a portion of an upper surface of the membrane to an exterior to allow an injection of the blood through the upper surface of the membrane; and
a filter bending bar configured to bend upwards an edge of the membrane in a direction facing the reaction channel part within the blood injection opening.

3. The corpuscle separation chip of claim 2, wherein the upper board further comprises a washing part hole connected to the other end of the washing part and configured to guide a movement of the plasma components.

4. The corpuscle separation chip of claim 2, wherein the lower board comprises:
a first fine channel part having a plurality of first fine channels formed therein in a protruding manner and arranged with a width decreasing along a movement direction of the plasma components in correspondence with a position of the blood injection opening, the first fine channel part contacting one side of a lower surface of the membrane; and
a second fine channel part having a plurality of second fine channels formed therein in a protruding manner in correspondence with a position of the washing part.

5. The corpuscle separation chip of claim 4, wherein the plurality of first fine channels have a width decreasing along a movement direction of the plasma components so as to promote an inflow of the plasma components into the reaction channel part.

6. The corpuscle separation chip of claim 4, wherein the plurality of second fine channels are arranged with a width increasing along a movement direction of the plasma.

7. The corpuscle separation chip of claim 4, wherein one or more filter guide holes are formed around the first fine channel part, and
one or more of edges of the membrane of the other direction are placed over the filter guide holes so as to minimize contact with the lower board.

8. The corpuscle separation chip of claim 2, wherein an attachment wall is formed on the upper board, the attachment wall surrounding the blood injection opening, the reaction channel part, and the washing part, the attachment wall having a lower surface thereof adjoining and attached to the lower board.

9. The corpuscle separation chip of claim 8, wherein a channel surface of the reaction channel part and a lower surface of the attachment wall have a level difference such that an attachment of the upper board and the lower board forms a channel wall.

10. The corpuscle separation chip of claim 8, wherein the filter securing guide and a lower surface of the attachment wall have a level difference such that blood lost at the membrane is prevented from moving through the attachment wall.

11. The corpuscle separation chip of claim 8, wherein the filter bending bar and a lower surface of the attachment wall have a level difference so as to prevent lost blood from moving in a direction of the attachment wall in a space formed by the filter bending bar and an upper surface of the membrane adjoining each other.

12. The corpuscle separation chip of claim 2, wherein a guide channel part is formed in the lower board, the guide channel part connected to one end of the first fine channel part where the width is decreased so as to guide plasma components separated by the membrane to the reaction channel part.

13. The corpuscle separation chip of claim 12, wherein the guide channel part does not have a level difference between an upper surface of the guide channel and a lower surface of the upper board so that there is a reduction in volume of fluid at a section connecting to the reaction channel part.

14. A corpuscle separation chip comprising:
a blood collection structure configured to collect blood in a blood injection channel formed along an up-down direction and separate the blood into plasma components and corpuscle components; and
a board structure having the blood collection structure joined thereto and having a channel formed therein for providing a path causing the plasma components to move in one direction due to capillary forces.

15. The corpuscle separation chip of claim 14, wherein the blood collection structure comprises:
a membrane configured to separate the blood into the plasma components and the corpuscle components; and
a blood injection channel part having formed therein:
an arch-shaped support frame, and
a blood injection channel formed at a center portion of the support frame and configured to draw in the blood by capillary forces.

16. The corpuscle separation chip of claim 15, wherein a filter insertion groove and a board joining part are formed in far ends of the support frame, the filter insertion groove configured to receive the membrane inserted therein, the board joining part configured for joining with the board structure.

17. The corpuscle separation chip of claim 16, wherein the board structure comprises:
an upper board having formed therein:
a reaction channel part having plasma components separated by the membrane move therethrough, and
a washing part having one end thereof connected to the reaction channel part and configured to be filled with the plasma components passed through the reaction channel part; and
a lower board having formed therein:
a first fine channel part having a plurality of first fine channels formed therein in a protruding manner and arranged with a width decreasing along a movement direction of the plasma components in correspondence with a position of the blood injection opening, the first fine channel part contacting one side of a lower surface of the membrane,
a second fine channel part having a plurality of second fine channels formed therein in a protruding manner in correspondence with a position of the washing part, and
a sampler joining part formed on either side of the first fine channel part.

18. The corpuscle separation chip of claim 17, wherein the upper board further comprises a washing part hole connected to the other end of the washing part and configured to guide a movement of the plasma components.

19. The corpuscle separation chip of claim 17, wherein filter pressing pieces are formed at a lower end of the blood injection channel part in an inverted Y shape on either side with respect to the blood injection channel, the filter pressing pieces configured to place the membrane in close contact with the first fine channel part by applying pressing forces downward onto the membrane inserted in the filter insertion groove.

20. The corpuscle separation chip of claim 19, wherein the filter pressing pieces are arranged perpendicularly to a movement direction of the plasma components such that the pressing forces are applied on positions on an upper surface of the membrane corresponding to a perimeter area on either side of the first fine channel part.

21. The corpuscle separation chip of claim 19, wherein the filter pressing pieces are arranged parallel to a movement direction of the plasma components such that the pressing forces are applied on positions on an upper surface of the membrane corresponding to a front end and rear end of the first fine channel part.

22. The corpuscle separation chip of claim 17, wherein the sampler joining part is formed as a press-fit projection of a particular thickness and height, and the board joining part is formed as a press-fit indentation of a thickness and depth corresponding to the press-fit projection, so as to enable a press-fit coupling between the board structure and the blood collection structure.
